# FASCICULE DE BREVET EUROPEEN

(11) **EP 2 861 932 B1**
(45) Date de publication et mention de la délivrance du brevet: **11.07.2018**
(21) Numéro de dépôt: 13729990.5
(22) Date de dépôt: 17.05.2013
(51) Int. Cl.: F41H 5/04, C04B 35/626, C04B 35/573

(54) **PRODUIT EN CARBURE DE SILICIUM POUR BLINDAGE**
ABSCHIRMPRODUKT AUS SILICIUMCARBID
PRODUCT MADE FROM SILICON CARBIDE FOR SHIELDING

(30) Priorité: 15.06.2012 FR 1255632
(43) Date de publication de la demande: 22.04.2015
(73) Titulaire: Saint-Gobain Centre De Recherches Et D'etudes Europeen, 92400 Courbevoie (FR); Centre National de la Recherche Scientifique, 75016 Paris (FR)
(72) Inventeur: ROSSIQUET, Gilles, F-16100 Louzac Saint Andre (FR); JORGE, Eric, F-84210 Les Valayans (FR)
(74) Mandataire: Saint-Gobain Recherche
(86) Numéro de dépôt international: PCT/FR2013/051096
(87) Numéro de publication internationale: WO 2013/186453

(56) Documents cités:
- WO-A2-2007/126784
- US-A1- 2002 160 902
- J. Marchi ET AL: "Densification studies of silicon carbide-based ceramics with yttria, silica and alumina as sintering additives", MATERIALS RESEARCH, vol. 4, no. 4, 1 January 2001 (2001-01-01) , pages 231-236, XP055319048, BR ISSN: 1516-1439, DOI: 10.1590/S1516-14392001000400002

## Description

L'invention se rapporte à produit dense à base de carbure de silicium pouvant notamment être utilisé pour ses propriétés balistiques, dans des éléments d'armures ou de blindage.

Les matériaux céramiques sont parmi les composants les plus importants des systèmes d'armures ou de blindage. En particulier, parmi les matériaux céramiques utilisés dans une telle application figure le carbure de silicium ou SiC.

Ainsi, pour les véhicules blindés comme pour les soldats portant des éléments d'armures permettant de les protéger des projectiles, la masse supplémentaire liée au port d'un blindage est un élément essentiel. En effet cette masse supplémentaire peut être un obstacle aux déplacements rapides, ou générer de la fatigue supplémentaire pour les soldats.

L'utilisation de matériaux céramiques tels que le carbure de silicium permet notamment un gain de poids important.

Il existe donc continuellement un besoin d'amélioration des produits céramiques utilisés comme blindage, cette amélioration étant mesurée notamment par leur performance balistique. L'objet de la présente invention est donc de proposer un nouveau matériau différent des produits actuellement utilisés dans le domaine et dont les performances sont améliorées, en particulier présentant une profondeur de pénétration d'un projectile plus faible. Selon le choix effectué, l'amélioration de ce paramètre par rapport aux matériaux de l'art peut permettre soit d'assurer une plus grande résistance et donc une meilleure sécurité par le blindage, soit de diminuer l'épaisseur du blindage pour en réduire sa masse, tout en conservant une même sécurité, c'est-à-dire une même performance balistique.

Selon des principes connus, pour améliorer les performances balistiques d'un blindage (constitué par exemple par un matériau de carbure de silicium fritté en phase solide tel que l'Hexoloy® SA commercialisé par la société Saint-Gobain, dont la fiche technique, disponible sur le site www.hexoloy.com, précise que la taille des grains est comprise entre 4 et 10 micromètres et que la masse volumique est égale à 3,10 gr/cm³), il est d'usage d'une part de privilégier les matériaux de plus forte masse volumique et d'autre part de sélectionner une microstructure dans laquelle la taille moyenne des grains est limitée, car il est généralement admis qu'une action combinée sur ces deux critères permettant d'obtenir pour un même produit à base d'un même matériau, les meilleures performances balistiques.

Une voie alternative et originale a été suivie par la société déposante qui consiste à augmenter la masse volumique tout en augmentant cette fois la taille des grains de SiC dans le matériau. La taille des grains selon l'invention atteint ainsi un niveau jamais décrit pour de telles masses volumiques. Contrairement aux attentes, il a été trouvé que les performances balistiques du produit selon l'invention sont supérieures à celle de l'Hexoloy® SA.

Les exemples 29 et 34 de WO 2007/126784 décrivent un produit en SiC densifié à l'aide des additifs de frittage Al, AlN, C et B₄C.
D'après les données reportées dans la table 14 en page 26 de cette publication, on peut déterminer que la masse volumique relative des produits obtenus selon ces exemples est comprise entre 97,5% et 98%.

Selon un premier aspect, la présente invention se rapporte à un produit obtenu par frittage en phase solide d'une poudre de carbure de silicium et d'un additif de frittage, ledit produit présentant une masse volumique relative supérieure à 98,5% et comprenant :
- plus de 92% poids de SiC présent sous forme de grains,
- moins de 2% poids d'oxygène élémentaire,
- moins de 6% poids, au total, d'autres éléments,
ledit produit étant caractérisé en ce que :
- plus de 10% en nombre des grains de SiC, sur la base du nombre total desdits grains, présentent un facteur d'allongement F supérieur à 3 (F > 3),
- plus de 50% en nombre desdits grains, dont le facteur d'allongement F est supérieur à 3, présentent une largeur supérieure à 3 micromètres,
- les autres grains de SiC dans ledit produit présentent un diamètre équivalent moyen supérieur à 1 micromètre, de préférence supérieur à 4 micromètres, ou même supérieur à 5 micromètres, et inférieur à 20 micromètres et le nombre de grains de SiC présentant un facteur d'allongement F supérieur à 6 est inférieur à 7%, ledit produit comprenant entre 0,1% et 4% poids d'au moins un autre élément choisi parmi le bore, le titane, le zirconium, le carbone libre et moins de 2% poids, au total, d'autres éléments.
On donne les indications et définitions suivantes, en relation avec la description précédente de la présente invention :
On appelle « F » ou « facteur d'allongement » d'un grain anisotrope de forme générale allongée, le rapport de sa longueur « L », mesurée le long d'une ligne directrice et de sa largeur « 1 ». Le facteur d'allongement est donc défini selon l'invention par le rapport F = L/l.

La longueur L du grain est mesurée le long d'une ligne directrice rectiligne dudit grain, et correspond à sa plus grande longueur.

La largeur 1 est définie comme la plus grande largeur mesurée dans l'ensemble des plans transversaux à ladite ligne directrice (c'est-à-dire perpendiculaires à la ligne directrice).

Par diamètre équivalent de grains, on entend la demi-somme de la plus grande longueur du grain et de la plus grande largeur du grain, mesurée dans une direction perpendiculaire à ladite plus grande longueur.

Le facteur F et le diamètre équivalent sont classiquement déterminés à partir de l'observation de la microstructure du matériau fritté, classiquement grâce à des images prises en MEB (microscopie électronique à balayage) sur une coupe du produit fritté. Il a été vérifié dans les exemples qui suivent que ladite microstructure est sensiblement identique, quelque soit l'orientation de la coupe.

Par frittage en phase liquide, on entend selon la définition habituelle, un frittage dans lequel au moins un des additifs de frittage, plusieurs additifs ou encore une phase formée à partir de la combinaison de certains de ces additifs, voire certaines impuretés du produit à fritter, sont susceptibles de former une phase liquide lors du traitement thermique de frittage, en une quantité telle qu'elle soit suffisante pour permettre le réarrangement des grains et les amener ainsi au contact les uns des autres. Un tel exemple bien connu de ce dernier cas est en particulier la phase Y₃Al₅O₁₂.

Par opposition, on entend par frittage en phase solide, un frittage dans lequel aucun des additifs ajoutés et permettant le frittage, ou encore aucune phase formée à partir de la combinaison de certains de ces additifs, voire aucune impureté du produit à fritter, n'est susceptible de former une phase liquide en une quantité telle qu'elle soit suffisante pour permettre le réarrangement des grains et les amener ainsi au contact les uns des autres. C'est en particulier le cas lorsqu'aucune phase liquide n'est créée pendant le frittage. Un produit obtenu par frittage en phase solide est communément appelé « fritté en phase solide ». Le produit selon la présente invention, ne contient donc pas de préférence les éléments Yttrium et d'aluminium autrement que sous forme d'impuretés. Notamment une quantité d'yttrium inférieure à 0,05% poids est préférée.

Par additif de frittage, souvent plus simplement appelé « additif » dans la présente description, on entend un composé connu habituellement pour permettre et/ou accélérer la cinétique de la réaction de frittage.

Par masse volumique relative d'un produit, on entend le rapport égal à la masse volumique apparente divisée par la masse volumique absolue, exprimé en pourcentage.

Par masse volumique apparente d'un produit, on entend au sens de la présente invention, le rapport égal à la masse du produit divisée par le volume qu'occupe ledit produit.

Par masse volumique absolue d'un produit, on entend au sens de la présente invention, le rapport égal à la masse de matière sèche dudit produit après un broyage à une finesse telle qu'il ne demeure sensiblement aucune porosité fermée, divisée par le volume de cette masse après broyage. Elle peut être mesurée par pycnométrie à hélium.

Par «contenant un», «comprenant un» ou «comportant un», on entend «comportant au moins un», sauf indication contraire.

Sauf indication contraire, dans la présente description, tous les pourcentages sont des pourcentages massiques.

On décrit ci-après différents modes de réalisations préférés de la présente invention, qui peuvent bien évidemment et le cas échéant être combinés entre eux : - Lesdits autres éléments peuvent être essentiellement présents sous forme d'autres phases carbonées, distinctes du carbone libre et du carbure de silicium, et d'impuretés. Par impuretés on entend les constituants inévitables, introduits involontairement et nécessairement avec les matières premières ou résultants de réactions avec ces constituants. Les impuretés ne sont pas des constituants nécessaires, mais seulement tolérés. Une telle impureté est en particulier constituée par la silice, désavantageusement connue pour inhiber le frittage du SiC. Sans sortir du cadre de l'invention, il est possible de limiter l'impureté silice en lavant les poudres de SiC voire d'additif de frittage dans une étape préalable et/ou en ajoutant au mélange initial des additifs contenant du carbone, pour l'éliminer pendant le frittage.

Les additifs de frittage cités précédemment sont de préférence choisis parmi le carbone, les carbures de bore, de titane, de zirconium ou les borures de zirconium, de titane, seuls ou en mélange, par exemple choisis parmi B₄C, ZrB₂, TiC, TiB₂, le carbone, seuls ou en mélange, sans que cette liste soit bien évidemment exhaustive, ainsi que les précurseurs connus de tels composés. Selon l'invention, un précurseur d'un constituant est un composé capable, lors d'un frittage, de conduire à ce constituant. Le remplacement d'un constituant par une quantité «équivalente» d'un précurseur de ce constituant ne modifie pas les quantités dudit constituant dans le produit fritté obtenu.
- La somme des éléments bore, carbone libre, titane et zirconium, B+Cₗ+Ti+Zr, est supérieure à 0,1%, de préférence supérieure à 0,2%, de préférence encore supérieure à 0,5%, voire supérieure à 0,75% poids.
- La somme des éléments bore, carbone libre, titane et zirconium est inférieure à 4%, de préférence inférieure à 3,2%, de préférence inférieure à 3%, de préférence encore inférieure 2,5%, ou même inférieure à 2%, voire inférieure à 1,5%, voire inférieure à 1% poids.
- La teneur en carbone libre est inférieure à 2,7%, de préférence inférieure à 2%, de préférence inférieure à 1,4%, voire inférieure à 1%, voire inférieure à 0,7% poids.
- Selon un premier mode possible de réalisation préféré le produit comprend l'élément bore et du carbone libre dans les proportions suivantes :
   - la teneur en élément bore est supérieure à 0,1%, de préférence supérieure à 0,15% poids,
   - la teneur en élément bore est inférieure à 0,5%, de préférence inférieure à 0,4%, voire inférieure à 0,3% poids,
   - la teneur en carbone libre est supérieure à 0,1%, de préférence supérieure à 0,3%, de préférence supérieure à 0,5% poids,
   - la teneur en carbone libre est inférieure à 2,7%, de préférence inférieure à 2%, de préférence inférieure à 1,4%, voire inférieure à 1%, voire inférieure à 0,7% poids.
Ce mode de réalisation peut en particulier résulter de l'utilisation comme additif de frittage en phase solide de B₄C et de carbone.
- Selon un deuxième mode de réalisation, le produit comprend l'élément bore dans les proportions suivantes :
   - la teneur en élément bore est supérieure à 0,1%, de préférence supérieure à 0,15% poids,
   - la teneur en élément bore est inférieure à 0,5%, de préférence inférieure à 0,4%, voire inférieure à 0,3% poids,
   - la teneur en oxygène élémentaire est inférieure à 0,5%, de préférence inférieure à 0,3% poids.
Ce mode de réalisation peut en particulier résulter de l'utilisation comme additif de frittage en phase solide de B₄C.
- Selon un troisième mode possible de réalisation, le produit comprend du carbone libre dans les proportions suivantes :
   - la teneur en carbone libre est supérieure à 0,1%, de préférence supérieure à 0,3%, de préférence supérieure à 0,5% poids,
   - la teneur en carbone libre est inférieure à 2,7%, de préférence inférieure à 2%, de préférence inférieure à 1,4%, voire inférieure à 1%, voire inférieure à 0,7% poids.
Ce mode de réalisation peut en particulier résulter de l'utilisation comme additif de frittage en phase solide de carbone.
- Selon un quatrième mode possible de réalisation, le produit comprend l'élément titane et du carbone libre dans les proportions suivantes :
   - la teneur en élément titane est supérieure à 0,1%, de préférence supérieure à 0,15% poids,
   - la teneur en élément titane est inférieure à 0,5%, de préférence inférieure à 0,4%, voire inférieure à 0,3% poids,
   - la teneur en carbone libre est supérieure à 0,1%, de préférence supérieure à 0,3%, de préférence supérieure à 0,5% poids,
   - la teneur en carbone libre est inférieure à 2,7%, de préférence inférieure à 2%, de préférence inférieure à 1,4%, voire inférieure à 1%, voire inférieure à 0,7% poids.
Ce mode de réalisation peut en particulier résulter de l'utilisation comme additif de frittage en phase solide de TiC et de carbone.
- Selon un cinquième mode possible de réalisation, le produit comprend les éléments bore et titane et du carbone libre dans les proportions suivantes :
   - la somme des éléments bore et titane, B+Ti, est supérieure à 0,1%, de préférence supérieure à 0,2% poids,
   - la somme des éléments bore et titane, B+Ti est inférieure à 0,7%, de préférence inférieure à 0,6%, voire inférieure à 0,5%, voire inférieure à 0,4% poids,
   - la teneur en carbone libre est supérieure à 0,1%, de préférence supérieure à 0,3%, de préférence supérieure à 0,5% poids,
   - la teneur en carbone libre est inférieure à 2,7%, de préférence inférieure à 2%, de préférence inférieure à 1,4%, voire inférieure à 1%, voire inférieure à 0,7% poids.
Ce mode de réalisation peut en particulier résulter de l'utilisation comme additif de frittage en phase solide de TiB₂ et de carbone.
- Selon un sixième mode possible de réalisation, le produit comprend les éléments bore et zirconium et du carbone libre dans les proportions suivantes :
   - la somme des éléments zirconium et bore Zr+B, est supérieure à 0,1%, de préférence supérieure à 0,2% poids,
   - la somme des éléments zirconium et bore est inférieure à 0,7%, de préférence inférieure à 0,6%, voire inférieure à 0,5%, voire inférieure à 0,4% poids,
   - la teneur en carbone libre est supérieure à 0,1%, de préférence supérieure à 0,3%, de préférence supérieure à 0,5% poids,
   - la teneur en carbone libre est inférieure à 2,7%, de préférence inférieure à 2%, de préférence inférieure à 1,4%, voire inférieure à 1%, voire inférieure à 0,7% poids.
Ce mode de réalisation peut en particulier résulter de l'utilisation comme additif de frittage en phase solide de ZrB₂ et de carbone.
- Le produit fritté selon l'invention présente une masse volumique relative supérieure à 99%, de préférence supérieure à 99,5%, voire même supérieure à 99,7%.
- La somme totale des éléments lanthanides, actinides et yttrium, dans le produit est inférieure à 0,05% poids, voire inférieure à 0,04% poids ou même inférieure à 0,03% poids. Un élément « lanthanide » est un élément du tableau périodique des éléments présentant un numéro atomique compris entre 57 et 71. Un élément « actinide » est un élément du tableau périodique des éléments présentant un numéro atomique compris entre 89 et 103.
- Dans un mode de réalisation, la teneur en aluminium dans le produit est inférieure à 1000 ppm, voire inférieure à 500 ppm, voire inférieure à 300 ppm, rapporté au poids dudit produit. Dans un tel mode, ladite teneur en aluminium est préférentiellement supérieure à 50 ppm, voire supérieure à 100 ppm ou même supérieure à 200 ppm, rapporté au poids dudit produit.

- Le nombre de grains de SiC présentant un facteur d'allongement F supérieur à 3 est supérieur à 15%, de préférence est supérieur à 18%, de préférence encore est supérieur à 20%.
- Le nombre de grains de SiC présentant un facteur d'allongement F supérieur à 3 est inférieur à 40%, et de préférence est inférieur à 35%, ou encore est inférieur à 30%, voire même est inférieur à 25%.
- Le nombre de grains de SiC présentant un facteur d'allongement F supérieur à 4 est supérieur à 2%, de préférence supérieur à 4%, de préférence est supérieur à 6%, de préférence encore est supérieur à 8%.
- Le nombre de grains de SiC présentant un facteur d'allongement F supérieur à 4 est inférieur à 15%, de préférence encore est inférieur à 12%.
- Le nombre de grains de SiC présentant un facteur d'allongement F supérieur à 5 est supérieur à 1%, voir est supérieur à 2%. De préférence ce nombre est inférieur à 8%.
- Le nombre de grains de SiC présentant un facteur d'allongement F supérieur à 8 est inférieur à 5%, voire inférieur à 3%, voire inférieur à 1%.
- chaque grain présentant un facteur d'allongement F supérieur à 3 est au contact d'au moins un, et de préférence d'au moins deux autres grains présentant un facteur d'allongement F supérieur à 3.
- plus de 60% en nombre des grains présentant un facteur d'allongement supérieur à 3, de préférence plus de 70%, de préférence plus de 80% desdits grains, présentent une largeur 1 supérieure à 2 micromètres.
- Plus de 60% en nombre des grains présentant un facteur d'allongement supérieur à 3, voire plus de 65% desdits grains, présentent une largeur l supérieure à 3 micromètres.
- Plus de 20% en nombre des grains présentant un facteur d'allongement supérieur à 3, de préférence plus de 30%, de préférence plus de 40% desdits grains, présentent une largeur l supérieure à 4 micromètres.
- Plus de 10% en nombre des grains présentant un facteur d'allongement supérieur à 3, de préférence plus de 20%, de préférence plus de 30% desdits grains, présentent une largeur l supérieure à 5 micromètres.
- Plus de 15% en nombre, de préférence plus de 20% ou même plus de 25%, des autres grains de SiC dans ledit produit (c'est-à-dire des grains dont le facteur F est inférieur à 3) présentent un facteur d'allongement F supérieur à 2.
- Lesdits autres grains présentent un diamètre équivalent moyen supérieur à 2 micromètres, voire supérieur à 3 micromètres ou même supérieur à 5 micromètres. De préférence encore lesdits autres grains présentent un diamètre équivalent moyen inférieur à 9 micromètres, voire inférieur à 7 micromètres.
- Le produit selon l'invention ne comprend pas ou sensiblement pas de zones intermédiaires entre les grains dont la teneur en oxygène est supérieure à 15% poids et dont la plus grande longueur est supérieure ou égale à 50 nm. Une telle caractéristique indique en particulier que produit fritté selon l'invention est obtenu par un frittage en phase solide. Par exemple, sur le cliché en microscopie électronique, de telles zones intermédiaires se présentent sous la forme de poches, le produit comportant au plus une poche sur un ensemble de grains de SiC égal à 200 grains, et avantageusement une seule poche sur un ensemble de grains de SiC égal à 500 grains. Dans un mode de réalisation préféré, le produit ne comporte pas de poche. Lorsqu'une telle poche existe au sein du produit selon l'invention, sa teneur en élément oxygène est inférieure ou égale à 15%, de préférence inférieure ou égale à 12%, de préférence est inférieure ou égale à 10%, de préférence encore est inférieure ou égale à 8%, de préférence inférieure ou égale à 5%.
- La teneur totale en élément oxygène dans le produit selon l'invention est de préférence inférieure à 1,6%, de préférence inférieure à 1,4%, de préférence inférieure à 1,2%, de préférence inférieure à 1%, voire inférieure à 0,7%, voire inférieure à 0,5%, ou même inférieure à 0,3% poids.
- Les éléments autres que le SiC, l'oxygène élémentaire, le bore, le titane, le zirconium, le carbone libre représentent moins de 1,5%, voire moins de 1,2%, voire moins de 1%, voire moins de 0,8%, voire moins de 0,5%, voire moins de 0,3%, voire moins de 0,2% poids. Dans un mode de réalisation, lesdits éléments sont des impuretés, au sens précédemment décrit.
- La dureté Vickers du produit, mesurée à 1 Kg, HV1 est supérieure à 24 GPa, de préférence supérieure à 26 GPa.
- La ténacité du produit est supérieure à 2 Mpa.m^{1/2}, de préférence est supérieure à 2,5 Mpa.m^{1/2}.
- La quantité de carbure de silicium présent dans le produit sous la forme du polytype 4H est supérieure à 20%, de préférence supérieure à 30%, de préférence supérieure à 40%, de préférence supérieure à 50%, voire supérieure à 60%, sur la base de la somme de l'ensemble des polytypes du carbure de silicium.

L'invention se rapporte également à un élément d'armure ou de blindage comprenant en tant que moyen de blindage un produit fritté tel que précédemment décrit. Un tel objet consiste en un élément de protection (notamment une armure ou un élément d'armure céramique) contre les projectiles (par exemple une balle, un obus, une mine ou un élément projeté lors de la détonation d'explosifs, comme des boulons, des clous (ou IED pour «Improvised Explosive Device»,) comportant une pièce en un produit selon l'invention, notamment :
- un élément d'armure pour véhicules, généralement sous forme de modules comme des plaques,
- un siège d'hélicoptère,
- un casque de soldat,
- un plastron pour soldat.
Cet élément de protection est classiquement composé d'une pièce en céramique (le produit selon l'invention) associée à un autre matériau, généralement ductile, en face arrière, classiquement appelé « backing », tel que des fibres, comme des fibres de Kevlar®, ou des fibres de verre, ou des métaux comme par exemple l'aluminium, sous la forme de plaque.
Sous l'impact, le matériau céramique se fragmente. Le rôle de la face arrière associée au matériau céramique est de consommer par déformation plastique l'énergie cinétique des débris et de maintenir un certain niveau de confinement sur la plaque de céramique.

Le produit selon l'invention peut être en particulier obtenu par un procédé de frittage en phase solide comprenant les étapes suivantes :
a) préparation d'une charge de départ comportant :
   - une poudre de particules de carbure de silicium,
   - une poudre d'un additif de frittage en phase solide,
b) mise en forme de la charge de départ sous la forme d'une préforme,
c) frittage en phase solide de ladite préforme de manière à obtenir un produit selon l'invention.

Dans un tel procédé on utilise une poudre de carbure de silicium initiale dont le diamètre médian des particules est inférieur à 5 micromètres, et de préférence est inférieur à 4 micromètres.

Le diamètre médian des particules (ou la « taille » médiane) des particules constituant une poudre, est donnée au sens de la présente invention par une caractérisation de distribution granulométrique. Un granulomètre laser permet la mesure des tailles inférieures ou égale à 3 mm. On appelle « diamètre médian » ou « taille médiane » d'un ensemble de particules, en particulier d'une poudre, le percentile D₅₀, c'est-à-dire la taille divisant les particules en première et deuxième populations égales en volume, ces première et deuxième populations ne comportant que des particules présentant une taille supérieure, ou inférieure respectivement, à la taille médiane.

Le produit selon l'invention est en particulier obtenu par un procédé tel que décrit précédemment, dans lequel l'additif de frittage est choisi parmi le carbone, les carbures de bore, de titane, de zirconium ou les borures de zirconium, de titane, seuls ou en mélange.

Dans un mode particulièrement préféré, le produit est obtenu par un procédé tel que décrit précédemment dans lequel l'additif de frittage comprend ou est constitué par un mélange de carbure de bore et de carbone.

On donne ci-après des indications plus détaillées concernant un procédé permettant d'obtenir le produit fritté selon l'invention :
La poudre de carbure de silicium utilisée initialement peut nécessiter une réduction de sa taille pour être conforme aux gammes décrites précédemment. Cette réduction de taille est généralement effectuée par broyage selon des techniques connues de l'homme du métier, comme par exemple un broyeur à billes, un broyeur à jarre, avec des billes en carbure de silicium.
De préférence, la taille médiane de la poudre de carbure de silicium utilisée, après broyage éventuel, est inférieure à 5 µm, de préférence inférieure à 4 µm, de préférence inférieure à 3 µm, de préférence inférieure à 2 µm, de préférence inférieure à 1,5 µm.
De préférence, la poudre de carbure de silicium présente une teneur en élément oxygène inférieure à 2%, de préférence inférieure à 1,6%, de préférence inférieure à 1,4%, de préférence inférieure à 1,2%, de préférence inférieure à 1%, voire inférieure à 0,7%, voire inférieure à 0,5%, voire même inférieure à 0,3% poids. Dans un mode de réalisation, la teneur en élément oxygène de la poudre de carbure de silicium peut être diminuée avant utilisation par toute technique connue de l'homme du métier, comme par exemple un lavage à l'acide.
Selon une caractéristique essentielle de la présente invention, la quantité d'additifs de frittage en phase solide et leur nature respective sont adaptées et choisies de manière à ce que le frittage à l'étape c) soit un frittage en phase solide.
La quantité d'additifs de frittage en phase solide est de préférence comprise entre 0,1% et 4% poids de la charge de départ.
Les additifs de frittage en phase solide peuvent être de préférence choisis parmi :
- les composés de bore, de titane, de zirconium, tels que des carbures, comme B₄C, TiC, des borures, comme ZrB₂, TiB₂, ainsi que des précurseurs desdits composés, et/ou
- le carbone libre, ainsi que des précurseurs de carbone libre, comme une résine phénolique.
Dans un mode de réalisation particulièrement préféré, les additifs de frittage en phase solide utilisés sont un mélange de B₄C et de carbone, la quantité de B₄C étant supérieure à 0,1%, de préférence supérieure à 0,2% et inférieure à 0,7%, de préférence inférieure à 0,6%, voire inférieure à 0,5%, voire inférieure à 0,4% en pourcentage poids de la charge de départ et la quantité de carbone est supérieure à 0,1%, de préférence supérieure à 0,3%, de préférence encore supérieure à 0,6% et inférieure à 3%, de préférence inférieure à 2%, de préférence inférieure à 1,5%, voire inférieure à 1%, voire inférieure à 0,8% en pourcentage poids de la charge de départ.

Dans un autre mode de réalisation possible, l'additif de frittage en phase solide utilisé est B₄C en une quantité supérieure à 0,1%, de préférence supérieure à 0,2% et inférieure à 0,7%, de préférence inférieure à 0,6%, voire inférieure à 0,5%, voire inférieure à 0,4% en pourcentage poids de la charge de départ et la teneur en oxygène élémentaire de la poudre de carbure de silicium de la charge de départ est inférieure à 0,3%.
Dans un autre mode de réalisation possible, l'additif de frittage en phase solide utilisé est du carbone en une quantité supérieure à 0,1%, de préférence supérieure à 0,3%, de préférence encore supérieure à 0,6% et inférieure à 3%, de préférence inférieure à 2%, de préférence inférieure à 1,5%, voire inférieure à 1%, voire inférieure à 0,8% en pourcentage poids de la charge de départ.
Dans un autre mode de réalisation possible, les additifs de frittage en phase solide utilisés sont un mélange de TiC et de carbone, la quantité de TiC étant supérieure à 0,1%, de préférence supérieure à 0,2% et inférieure à 0,7%, de préférence inférieure à 0,6%, voire inférieure à 0,5%, voire inférieure à 0,4% en pourcentage poids de la charge de départ et la quantité de carbone est supérieure à 0,1%, de préférence supérieure à 0,3%, de préférence encore supérieure à 0,6% et inférieure à 3%, de préférence inférieure à 2%, de préférence inférieure à 1,5%, voire inférieure à 1%, voire inférieure à 0,8% en pourcentage poids de la charge de départ.
Dans un autre mode de réalisation possible, les additifs de frittage en phase solide utilisés sont un mélange de TiB₂ et de carbone, la quantité de TiB₂ étant supérieure à 0,1%, de préférence supérieure à 0,2% et inférieure à 0,7%, de préférence inférieure à 0,6%, voire inférieure à 0,5%, voire inférieure à 0,4% en pourcentage poids de la charge de départ et la quantité de carbone est supérieure à 0,1%, de préférence supérieure à 0,3%, de préférence encore supérieure à 0,6% et inférieure à 3%, de préférence inférieure à 2%, de préférence inférieure à 1,5%, voire inférieure à 1%, voire inférieure à 0,8% en pourcentage poids de la charge de départ.
Dans un autre mode de réalisation possible, les additifs de frittage en phase solide utilisés sont un mélange de ZrB₂ et de carbone, la quantité de ZrB₂ étant supérieure à 0,1%, de préférence supérieure à 0,2% et inférieure à 0,7%, de préférence inférieure à 0,6%, voire inférieure à 0,5%, voire inférieure à 0,4% en pourcentage poids de la charge de départ et la quantité de carbone est supérieure à 0,1%, de préférence supérieure à 0,3%, de préférence encore supérieure à 0,6% et inférieure à 3%, de préférence inférieure à 2%, de préférence inférieure à 1,5%, voire inférieure à 1%, voire inférieure à 0,8% en pourcentage poids de la charge de départ.
Dans un mode de réalisation, la teneur en aluminium de la charge de départ est inférieure à 1000 ppm, voire inférieure à 500 ppm voire inférieure à 300 ppm, rapporté au poids de la charge de départ.
De préférence, la taille médiane des poudres d'additifs de frittage en phase solide utilisées est inférieure à 1,2 fois la taille médiane des grains de la poudre de carbure de silicium, de préférence inférieure à 1,4 fois, voire inférieure à 1,6 fois, ou même de façon très préférée inférieure à 1,8 fois la taille médiane des grains de la poudre de carbure de silicium.
Dans un mode de réalisation, la charge de départ contient un liant et/ou un lubrifiant et/ou un agent tensio-actif. Dans un mode de réalisation, la charge de départ ne contient pas de liant.
Le mélange est effectué de manière à obtenir une bonne homogénéité de distribution des différents éléments, le temps de mélange pouvant être adapté pour atteindre ce résultat.
De préférence, le mélange s'effectue dans un broyeur à jarre, le temps de mélange est supérieur à 15 heures. Un temps de mélange de 24 heures est bien adapté.
Lorsque le mélange est obtenu, celui peut être atomisé ou granulé, par exemple par « freeze granulation », afin d'obtenir des granules qui seront mises en forme, par exemple par pressage afin d'obtenir une préforme en céramique. D'autres techniques de mise en forme peuvent être utilisées, comme l'injection, le coulage en barbotine. Après mise en forme, la préforme peut être usinée.
La préforme est ensuite frittée. De préférence le frittage s'effectue en présence d'une pression appliquée sur la préforme lors du frittage. Des techniques de pressage à chaud (ou « Hot Pressing »), de pressage isostatique à chaud (ou « Hot Isostatique Pressing ») ou de SPS (« Spark Plasma Sintering ») sont particulièrement adaptées. <Voir homogénéité avec l'exemple pour lequel la pièce est pressée uni directionnellement puis frittée>.
La température de frittage est supérieure à 1700°C, de préférence supérieure à 1800°C, de préférence supérieure à 1850°C, voire supérieure à 1950°C et inférieure à 2300°C, voire inférieure à 2200°C.
Si une pression est appliquée pendant le frittage, cette pression est supérieure à 10 MPa, de préférence supérieure à 20MPa, de préférence supérieure à 35 MPa et inférieure à 500 MPa, de préférence inférieure à 300 MPa, voire inférieure à 200 MPa, voire inférieure à 100 MPa, voire inférieure à 75MPa, voire inférieure à 55 MPa.
Le temps de maintien en palier à haute température peut être nul, en particulier lors d'un frittage par SPS. De préférence ce temps de maintien est supérieur à 0,5 minutes, de préférence supérieur à 1 minute, de préférence supérieur à 2 minutes, de préférence supérieur à 4 minutes et inférieur à 60 minutes, de préférence inférieur 30 minutes, de préférence inférieur à 20 minutes, de préférence inférieure à 10 minutes, de préférence inférieur à 6 minutes. Un temps de frittage égal à 5 minutes est bien adapté.
La vitesse de montée à la température maximale est de préférence supérieure à 10°C/min, voire supérieure à 30°C/min, voire supérieure à 50°C/min, voire supérieure à 100°C/min.
La cuisson a lieu sous atmosphère contrôlée, de préférence sous vide ou sous argon ou sous azote.
La température et/ou le temps de maintien à la température maximale du cycle de frittage conditionnent la présence et la quantité de grains présentant un facteur de forme F > 3. Les règles suivantes peuvent être adoptées pour ajuster la microstructure du produit après frittage : pour augmenter le nombre des grains de forme allongée, et/ou pour augmenter le facteur d'allongement des grains et/ou pour augmenter le diamètre équivalent moyen des grains complément des grains de forme allongée, on augmente la température maximale du cycle de frittage et/ou on augmente le temps de maintien en palier.

Les exemples qui suivent sont donnés à titre purement illustratif et ne limitent sous aucun des aspects décrits la portée de la présente invention.

### Exemple 1 (comparatif):

Le produit de l'exemple comparatif 1 est un produit commercial en carbure de silicium Hexoloy® SA, commercialisé par la société Saint-Gobain Ceramics. Il est fabriqué par frittage en phase solide en utilisant comme additif de frittage du B₄C et du carbone. Il est couramment utilisé dans des installations comme élément de blindage contre les projectiles.

### Exemple 2 (selon l'invention):

Le produit de l'exemple 2 selon l'invention est obtenu de la manière suivante :
Une barbotine a été préparée en mélangeant :
- 1876 grammes d'eau,
- 1927 grammes d'une poudre de carbure de silicium, présentant une surface spécifique de 8,6 m²/g, une taille médiane de particules égale à 1,08 µm, une teneur en élément oxygène égale à 0,27% en masse, après un lavage à l'acide. La poudre est constituée à plus 98% poids de particules de carbure de silicium,
- 5,9 grammes d'une poudre de carbure de bore B₄C de référence Norbide Boron Carbide® commercialisée par la société Saint-Gobain Industrial Ceramics, présentant une taille médiane de particules égale à 3,6 µm, et une teneur en B₄C supérieure à 98%. La masse de la poudre de B₄C, premier additif de frittage, représente 0,3% de la masse totale de la poudre de carbure de silicium et de la poudre de B₄C,
- 42,3 grammes de résine phénolique Plyophen 43290 ®, commercialisée par la société Durez. La résine est un précurseur de carbone, utilisé comme second additif de frittage,
- 0,79 grammes de Castament FS10 ® commercialisé par la société BASF, soit 0,04% de la masse de la poudre de carbure de silicium.

Le taux de matière sèche est égal à 50% de la masse de la barbotine.

Le pH de la barbotine est ajusté à 11,5 par un ajout d'ammoniaque. Aucun liant n'est introduit dans la barbotine.

Le mélange est effectué dans un broyeur à jarre, pendant 48 heures, avec des cylbeps.

La barbotine est ensuite coulée dans un plateau en inox sous la forme d'une plaque d'épaisseur égale à 4 cm. Cette plaque est ensuite congelée avec une vitesse de front de solidification égale à 8 µm/s.

Après congélation, les cristaux de glace sont éliminés par sublimation, en plaçant la plaque congelée sous un vide égal à 400 µbar et à une température égale à -20°C. La température est ensuite augmentée jusqu'à 40°C pour sécher les agglomérats formés.

Les agglomérats obtenus sont broyés dans un broyeur modèle CB220 de la société Sodémi avec un bol mis en vibration comprenant à l'intérieur 2 mobiles (un disque et un anneau) de manière à obtenir une poudre d'agglomérats présentant une taille médiane d'agglomérats comprise entre 3 et 50 µm. L'humidité résiduelle est égale à 0,6%.

La poudre d'agglomérats est introduite dans une matrice SPS (Spark Plasma Sintering ou frittage flash) de manière à obtenir après frittage des pièces frittées présentant un diamètre égal à 80 mm et une épaisseur d'environ 4 mm.

L'étape de SPS est la suivante :
- montée à 50°C par minute à une température de 2000°C,
- palier de 5 minutes à 2000°C,
- descente en refroidissement contrôlé à 50°C/min jusqu'à 600°C
- descente en refroidissement libre de 600°C à température ambiante,

La pression appliquée pendant le cycle de montée et le palier est de 40 MPa. Le diamètre de la matrice est de 80mm. La masse de poudre utilisée est de 66 g.

### Exemple 3 (comparatif):

Le produit de l'exemple 3 comparatif est un produit de carbure de silicium obtenu cette fois par un frittage en phase liquide et contenant entre les grains de SiC une phase secondaire comprenant essentiellement les éléments Y, Al, Si et O, sous une forme cristallisée.

Il est fabriqué selon le procédé suivant :
Une barbotine a été préparée en mélangeant :
- 2212 grammes d'eau,
- 2205 grammes d'une poudre de carbure de silicium Starck UF25®, présentant une surface spécifique de 25 m²/g, une taille médiane de particules égale à 0,43 µm, une teneur en élément oxygène égale à 1,7% en masse, et contenant plus de 98% de carbure de silicium,
- 245 grammes d'une poudre de YAG (Y₃Al₅O₁₂), commercialisée par la société Baikowski, présentant une taille médiane de particules égale à 0,18 µm, et une teneur en Y₃Al₅O₁₂ supérieure à 99,5%. La masse totale de la poudre d'Y₃Al₅O₁₂ représente 10% de la masse pulvérulente totale (carbure de silicium + Y₃Al₅O₁₂),
- 0,86 grammes de Castament FS10 ® commercialisé par la société BASF, soit 0,039% de la masse de la poudre de carbure de silicium.

Le taux de matière sèche est égal à 50% de la masse de la barbotine. Le pH de la barbotine a été ajusté à 11,5 par un ajout de soude 1M.

Aucun liant n'a été introduit dans la barbotine.

Le mélange a été effectué dans un broyeur à jarre, pendant 24 heures, avec des cylbeps.

La barbotine est ensuite coulée dans un plateau en inox sous la forme d'une plaque d'épaisseur égale à 4 cm. Cette plaque est ensuite congelée avec une vitesse de front de solidification égale à 8 µm/s.

Après congélation, les cristaux de glace sont éliminés par sublimation, en plaçant la plaque congelée sous un vide égal à 400 µbar et à une température égale à -20°C. La température est ensuite augmentée jusqu'à 40°C pour sécher les agglomérats formés.

Les agglomérats obtenus sont broyés dans un broyeur modèle CB220 de la société Sodémi avec un bol mis en vibration comprenant à l'intérieur 2 mobiles (un disque et un anneau) de manière à obtenir une poudre d'agglomérats présentant une taille médiane d'agglomérats comprise entre 3 et 50 µm. L'humidité résiduelle est égale à 0,6%.

Des préformes de dimensions 80 x 80 x 12 mm³ sont obtenues par pressage unidirectionnel à froid, à une pression égale à 60 MPa, puis frittées sous argon, de manière à obtenir des pièces frittées dans le cycle suivant :
- montée à 400°C à une vitesse de 800°C/h,
- Montée de 400°C à 1000°C à une vitesse égale à 400°C/h,
- Montée de 1000°C à 1775°C à une vitesse égale à 230°C/h,
- montée de 1775°C à 1875°C à une vitesse égale à 100°C/h,
- palier de 0,5 heures à 1875°C,
- descente à refroidissement libre.

Les caractéristiques et propriétés des produits obtenus selon les exemples 1 à 3 précédents sont mesurées selon les techniques suivantes :
La masse volumique apparente est mesurée par imbibition, selon le principe de la poussée d'Archimède.

La masse volumique absolue est mesurée par pycnométrie à hélium sur un équipement AccuPyc 1330 de Micromeretics®, sur une poudre de produit broyé présentant une taille maximale inférieure à 160 µm.

La microstructure des matériaux constituant les produits des exemples 1 à 3 est étudiée selon les techniques classiques de microscopie électronique à balayage sur une coupe dudit produit.

Plus précisément les échantillons sont préparés de la façon suivante :
- une coupe du matériau au moyen d'une scie diamantée,
- un polissage jusqu'à l'obtention d'une qualité miroir,
- une attaque chimique visant à révéler les grains et les joints de grains ; l'attaque chimique consistant à plonger les échantillons polis de qualité miroir pendant 15 minutes dans un mélange porté à ébullition de 60 ml d'eau, 17 g d'hexacyanoferrate de potassium et 20 g de potasse.

Après cette préparation, les coupes des échantillons selon les exemples 1 à 3 sont observées selon les techniques habituelles en microscopie électronique.

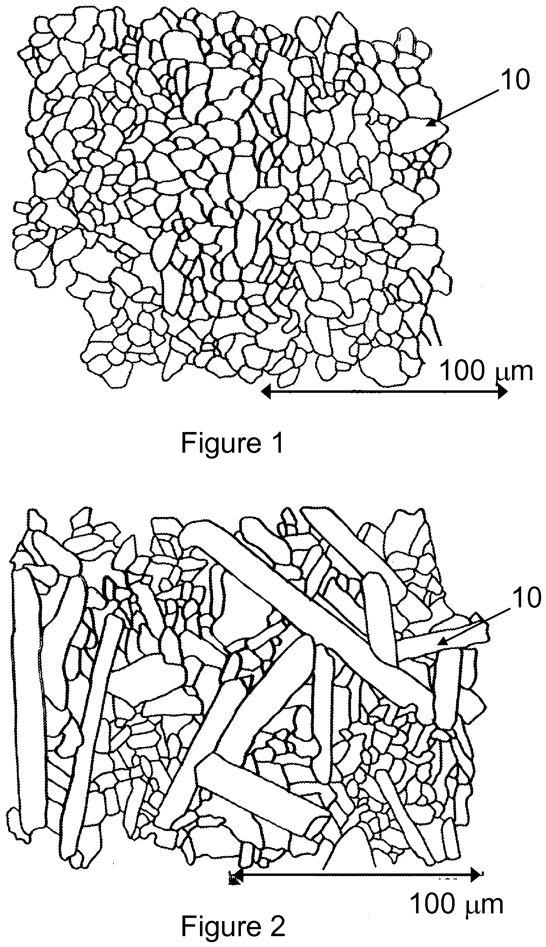

Les figures 1 et 2 ci-jointes sont des représentations des clichés obtenus lors de l'observation au microscope électronique à balayage respectivement des échantillons selon les exemples 1 et 2. Sur ces photographies, on observe un ensemble de grains (10) directement liés les uns aux autres, sans poches intermédiaires visibles.

Selon l'invention et à partir de plusieurs clichés illustrés par les figures 1 et 2 jointes, on détermine pour chaque grain la longueur L et la largeur l des grains (10), ainsi que le facteur d'allongement F correspondant, au sens précédemment décrit. Le nombre de grains ainsi analysés sur les clichés selon l'invention (illustrés par la figure 2) est d'environ 1300 grains. Ce facteur est représentatif de l'anisotropie des grains de SiC constituant chaque matériau.

Sans sortir du cadre de l'invention, pour accélérer le traitement des images, la mesure du facteur d'allongement pourrait bien entendu être automatisée grâce à tout logiciel connu de traitement de l'image, tel que le logiciel imageJ®. Il a par exemple été vérifié par la société déposante que la mesure effectuée par ce logiciel, en utilisant la fonction « Fit ellipse », donnait des résultats sensiblement identiques à ceux obtenus par mesure directe sur le cliché de microscopie électronique.

La teneur en oxygène du produit est mesurée par la méthode suivante : le produit, broyé à une taille inférieure à 160 micromètres et séché, disposé dans un creuset en graphite est placé dans un analyseur LECO TC 436 DR, et subit une décomposition thermique sous hélium. Le dégagement gazeux est analysé par un détecteur infrarouge calibré. La teneur en oxygène est déterminée à partir de la mesure du dégagement de CO et de CO₂.

La teneur en carbone libre du produit est mesurée par la méthode suivante :
- La teneur totale en carbone d'un échantillon du produit, broyé à une taille inférieure à 160 micromètres, est mesurée selon la norme ANSI B74.15-1992 (R2007), par la méthode de « résistance furnace technique ». Cette teneur est appelée CT1.
- La teneur en oxygène d'un échantillon du produit, broyé à une taille inférieure à 160 micromètres, est mesurée suivant la méthode décrite précédemment. Cette teneur est appelée O1.
- Un échantillon du produit, broyé à une taille inférieure à 160 micromètres, est traité thermiquement sous air à une température égale à 750°C pendant un temps de maintien nécessaire à la reprise de masse de l'échantillon. L'échantillon est immédiatement sorti du four lorsque la reprise de masse est constatée. Sur ledit échantillon, une mesure de la teneur en carbone totale est réalisée selon la norme ANSI B74.15-1992, par la méthode de « résistance furnace technique » et une mesure de la teneur en oxygène est réalisée selon la méthode décrite précédemment, appelées CT2 et O2, respectivement.

- La quantité O2-O1 est égale à la quantité d'oxygène provenant de l'oxydation du SiC lors du traitement thermique sous air à 750°C. Cette quantité d'oxygène est convertie en une quantité équivalente de carbone, CT3 par la formule suivante : CT3 = 12×(O2-O1)/32.
- La teneur en carbone libre du produit Cₗ est donnée par le calcul suivant : Cₗ = CT1-CT2-CT3.

La teneur en bore dans le produit est mesurée par dosage quantitatif classiquement par ICP (Inductively coupled plasma mass spectrometry) sur lixiviat après décomposition du produit par du carbonate de potassium à 250°C.

La teneur en autres éléments dans le produit est déterminée par fluorescence X sur des perles obtenues après attaque du produit au tétraborate de lithium.

La quantité de carbure de silicium présent sous le polytype 4H dans le produit est déterminée par Diffraction X, avec affinement Rietveld. La quantité de carbure de silicium présent sous le polytype 4H dans le produit de l'exemple 2 selon l'invention est égale à 58% sur la base de la somme de tous les polytypes du carbure de silicium mesurés, le complément étant essentiellement constitué par le polytype 6H.

La résistance à la pénétration par un projectile est mesurée par la méthode «depth of penetration test» telle que décrite ci-après :
Une pièce de dimensions 150x150x60mm³ en aluminium 2024 et présentant sur une de ses grandes faces un logement aux dimensions de la pièce en carbure de silicium à tester, soit ici un logement présentant un diamètre égale à 80 mm et une profondeur égale à 4 mm pour le produit selon l'invention et un logement de section égale à 60 mm x 60 mm et une profondeur égale à 4 mm pour les produits des exemples comparatifs 1 et 3, constitue le « backing ». Il existe un jeu entre le logement et la pièce en carbure de silicium à tester d'au plus 0,5 mm.

Après usinage aux dimensions, la pièce en carbure de silicium à tester est collée dans le logement à l'aide d'une colle Loctite.

L'ensemble subit ensuite l'impact d'un projectile perforant AP8 7,62 x 51 mm constitué d'un noyau en carbure de tungstène, tiré à une distance dudit ensemble égale à 15 mètres et à une vitesse égale à 930 m/s, ledit projectile étant tiré de manière à ce qu'il percute la pièce en carbure de silicium sensiblement à la perpendiculaire.

Après l'impact, la profondeur de pénétration du projectile dans le « backing » en aluminium est mesurée avec un pied de profondeur.

Les principales caractéristiques du procédé et des mesures effectuées sur le produit obtenu selon les exemples 1 à 3 sont reportées dans le tableau 1 qui suit :

**Tableau 1**

| | exemple 1 (comp.) | exemple 2 (inv.) | exemple 3 (comp.) |
|---|---|---|---|
| carbure de silicium (%) | 98,25 | 99,46 | 88,3 |
| Teneur en élément oxygène (%) | 0,37 | 0,12 | 3,72 |
| Teneur en carbone libre (%) | 0,74 | 0,17 | 0,1 |
| Teneur en élément B (%) | 0,51 | 0,15 | 0,01 |
| Teneur en élément Y (%) | - | 0,02 | 5,35 |
| Teneur en élément Al (%) | 0,09 | 0,03 | 2,42 |
| Autres éléments (%) | 0,04 | 0,05 | 0,1 |
| Masse volumique relative (%) | 98,5 | 99 | 98,6 |
| Nombre de grains de SiC présentant un facteur d'allongement F supérieur à 3, en % sur la base du nombre de grains de SiC | 4 | 21 | * |
| Nombre de grains de SiC présentant un facteur d'allongement F supérieur à 4, en % sur la base du nombre de grains de SiC | 1 | 9 | * |
| Nombre de grains de SiC présentant un facteur d'allongement F supérieur à 5, en % et sur la base du nombre de grains de SiC | 0 | 5 | * |
| Nombre de grains de SiC présentant un facteur d'allongement F supérieur à 6, en % et sur la base du nombre de grains de SiC | 0 | 2 | * |
| Nombre de grains de SiC avec : | 0 | 65 | * |
| - F > 3 | | | |
| - largeur 1 > 3 µm en % sur la base du nombre total de grains de SiC avec F > 3 | | | |
| Nombre de grains de SiC avec : | 0 | 47 | * |
| - F > 3 | | | |
| - largeur 1 > 4 µm en % sur la base du nombre total de grains de SiC avec F > 3 | | | |
| Diamètre équivalent moyen des grains de SiC autres que ceux avec F > 3 (µm) | 3,4 | 6,4 | 2,9 |
| Profondeur de pénétration, pour une épaisseur de carbure de silicium égale à 4 mm (mm) | 17,1 | 12,3 | 18 |

| | | | |
|---|---|---|---|
| * non mesure | | | |

Comme le montre les données reportées dans le tableau 1, la pénétration d'une balle AP8 7,62x51 dans le backing d'aluminium 2024 protégé par un blindage en carbure de silicium d'épaisseur égale à 4 mm, est égale à 17,1 mm sur le produit de l'exemple comparatif et seulement 12,3 mm pour le produit selon l'invention, soit une réduction de la pénétration dans le backing de 28%.

On voit également que le produit fritté selon l'exemple 3 comparatif présente une résistance à l'impact bien moins bonne que celle du produit fritté selon l'invention (exemple 2). On pourrait expliquer cette différence par le frittage en phase liquide du carbure de silicium, qui génère dans le produit fritté obtenu une seconde phase aux joints de grains, dont la présence semble être préjudiciable à la résistance du matériau fritté à l'impact d'un projectile.

Bien entendu, la présente invention n'est pas limitée aux modes de réalisation décrits et représentés, fournis à titre d'exemples. En particulier, des combinaisons des différents modes de réalisation décrits entrent également dans le cadre de l'invention.

L'invention n'est pas limitée non plus par la forme ou les dimensions du produit fritté à base de carbure de silicium.

## Revendications

1. Produit obtenu par frittage en phase solide d'une poudre de carbure de silicium et d'un additif de frittage, ledit produit présentant une masse volumique relative supérieure à 98,5% et comprenant :
- plus de 92% poids de SiC présent sous forme de grains,
- moins de 2% poids d'oxygène élémentaire,
- moins de 6% poids, au total, d'autres éléments,
ledit produit étant **caractérisé en ce que** :
- plus de 10% en nombre des grains de SiC, sur la base du nombre total desdits grains, présentent un facteur d'allongement F supérieur à 3 (F > 3),
- plus de 50% en nombre desdits grains, dont le facteur d'allongement F est supérieur à 3, présentent une largeur supérieure à 3 micromètres,
- les autres grains de SiC dans ledit produit présentent un diamètre équivalent moyen supérieur à 1 micromètre et inférieur à 20 micromètres et **en ce que** le nombre de grains de SiC présentant un facteur d'allongement F supérieur à 6 est inférieur à 7%, ledit produit comprenant entre 0,1% et 4% poids d'au moins un autre élément choisi parmi le bore, le titane, le zirconium, le carbone libre et moins de 2% poids, au total, d'autres éléments.

2. Produit selon la revendication précédente, dans lequel la somme pondérale des éléments bore, carbone libre, titane et zirconium est comprise entre 0,2 et 3,2% poids.

3. Produit selon l'une des revendications précédentes, dans lequel la somme pondérale des éléments bore, carbone libre, titane et zirconium est inférieure à 2% poids.

4. Produit selon l'une des revendications précédentes, dans lequel l'additif de frittage est choisi parmi le carbone, les carbures de bore, de titane, de zirconium ou les borures de zirconium, de titane, seuls ou en mélange.

5. Produit fritté selon l'une des revendications précédentes comprenant entre 0,1% et 0,5% poids de bore et entre 0,1% et 2,7% poids de carbone libre.

6. Produit selon la revendication précédente, dans lequel l'additif de frittage comprend ou est constitué par un mélange de carbure de bore et de carbone.

7. Produit fritté selon l'une des revendications précédentes présentant une masse volumique relative supérieure à 99%.

8. Produit fritté selon l'une des revendications précédentes, dans lequel la somme totale des éléments lanthanides, actinides et yttrium dans le produit est inférieure à 0,05% poids.

9. Produit fritté selon l'une des revendications précédentes, dans lequel la teneur en aluminium est inférieure à 1000 ppm et supérieure à 50 ppm, rapporté au poids dudit produit.

10. Produit selon l'une des revendications précédentes dans lequel le nombre de grains de SiC présentant un facteur d'allongement F supérieur à 3 est supérieur à 15% et inférieur à 40%, et de préférence est supérieure à 18% et inférieur à 35%.

11. Produit selon l'une des revendications précédentes dans lequel plus de 60% en nombre de grains de SiC présentant un facteur d'allongement F supérieur à 3 présentent une largeur supérieure à 3 micromètres.

12. Produit selon l'une des revendications précédentes dans lequel le nombre de grains de SiC présentant un facteur d'allongement F supérieur à 4 est supérieur à 2% et de préférence est inférieur à 15%.

13. Produit selon l'une des revendications précédentes dans lequel le nombre de grains de SiC présentant un facteur d'allongement F supérieur à 5 est supérieur à 1% et de préférence est inférieur à 8%.

14. Produit selon l'une des revendications précédentes dans lequel le nombre de grains de SiC présentant un facteur d'allongement F supérieur à 8 est inférieur à 1%.

15. Produit selon l'une des revendications précédentes dans lequel chaque grain présentant un facteur d'allongement F supérieur à 3 est au contact d'au moins un, et de préférence d'au moins deux autres grains présentant un facteur d'allongement F supérieur à 3.

16. Produit selon l'une des revendications précédentes dans lequel plus de 20% et de préférence plus de 30% des grains présentant un facteur d'allongement F supérieur à 3 présentent en outre une largeur supérieure à 4 micromètres.

17. Produit selon l'une des revendications précédentes dans lequel plus de 15% en nombre, de préférence plus de 20% en nombre, desdits autres grains de SiC dans ledit produit présentent un facteur d'allongement F supérieur à 2.

18. Produit selon l'une des revendications précédentes dans lequel les autres grains de SiC dans ledit produit présentent un diamètre équivalent moyen supérieur à 2 micromètres et de préférence inférieur à 9 micromètres.

19. Produit selon la revendication précédente dans lequel les autres grains de SiC dans ledit produit présentent un diamètre équivalent moyen supérieur à 4 micromètres, de préférence un diamètre équivalent moyen supérieur à 5 micromètres.

20. Produit selon l'une des revendications précédentes ne comprenant pas ou sensiblement pas de zones intermédiaires entre les grains dont la teneur en oxygène est supérieure à 15% poids et dont la plus grande longueur est supérieure ou égale à 50 nm.

21. Produit selon l'une des revendications précédentes, dans lequel la teneur totale en élément oxygène est inférieure à 1% poids.

22. Elément d'armure ou de blindage comprenant en tant que moyen de blindage un produit fritté selon l'une des revendications précédentes.

## Patentansprüche

1. Produkt, erhalten durch Festphasen-Sintern eines Siliciumcarbidpulvers und eines Sinteradditivs, wobei das Produkt eine relative Dichte von mehr als 98,5 % aufweist und Folgendes umfasst:
- mindestens 92 Gew.-% SiC in Form von Körner,
- höchstens 2 Gew.-% elementaren Sauerstoff,
- insgesamt höchstens 6 Gew.-% anderer Elemente,
wobei das Produkt **dadurch gekennzeichnet ist, dass**:
- mindestens 10 % der Zahl der SiC-Körner, basierend auf der Gesamtzahl der Körner, einen Längenfaktor F von mehr als 3 aufweisen (F > 3),
- mindestens 50 % dieser Körnermenge, deren Längenfaktor F größer ist als 3, eine Breite von mehr als 3 Mikrometern aufweist,
- die anderen SiC-Körner in diesem Produkt einen mittleren Äquivalenzdurchmesser von mehr als 1 Mikrometer und weniger als 20 Mikrometer aufweisen und die Anzahl der SiC-Körner die einen Längenfaktor F von mehr als 6 aufweisen, kleiner als 7 % ist, wobei das Produkt zwischen mindestens 0,1 und 4 Gew.-% eines anderen Elements, ausgewählt aus Bor, Titan, Zirkonium, freiem Kohlenstoff, und insgesamt höchstens 2 Gew.-% anderer Elemente umfasst.

2. Produkt nach dem vorhergehenden Anspruch, in welchem die Gewichtssumme der Elemente Bor, freier Kohlenstoff, Titan und Zirkonium zwischen 0,2 und 3,2 Gew.-% liegt.

3. Produkt nach einem der vorhergehenden Ansprüche, in welchem die Gewichtssumme der Elemente Bor, freier Kohlenstoff, Titan und Zirkonium kleiner als 2 Gew.-% ist.

4. Produkt nach einem der vorhergehenden Ansprüche, in welchem das Sinteradditiv aus Kohlenstoff, Bor-, Titan- oder Zirkoniumcarbiden oder Zirkonium- oder Titanboriden allein oder in Mischung ausgewählt ist.

5. Gesintertes Produkt nach einem der vorhergehenden Ansprüche, umfassend zwischen 0,1 und 0,5 Gew.-% Bor und zwischen 0,1 und 2,7 Gew.-% freien Kohlenstoff.

6. Produkt nach dem vorhergehenden Anspruch, in welchem das Sinteradditiv eine Mischung aus Borcarbid und Kohlenstoff umfasst oder daraus besteht.

7. Gesintertes Produkt nach einem der vorhergehenden Ansprüche mit einer relativen Dichte von mehr als 99 %.

8. Gesintertes Produkt nach einem der vorhergehenden Ansprüche, in welchem die Gesamtsumme der Elemente der Lanthaniden, Actiniden und Yttrium in dem Produkt kleiner als 0,05 Gew.-% ist.

9. Gesintertes Produkt nach einem der vorhergehenden Ansprüche, in welchem der Gehalt an Aluminium niedriger als 1000 ppm und höher als 50 ppm ist, bezogen auf das Gewicht des Produkts.

10. Produkt nach einem der vorhergehenden Ansprüche, in welchem die Anzahl der SiC-Körner, die einen Längenfaktor F größer als 3 aufweisen, größer als 15 % und kleiner als 40 % ist und vorzugsweise größer als 18 % und kleiner als 35 % ist.

11. Produkt nach einem der vorhergehenden Ansprüche, in welchem mehr als 60 % der Anzahl der SiC-Körner, die einen Längenfaktor F größer als 3 aufweisen, eine Breite von mehr als 3 Mikrometer aufweisen.

12. Produkt nach einem der vorhergehenden Ansprüche, in welchem die Anzahl der SiC-Körner, die einen Längenfaktor F größer als 4 aufweisen, größer als 2 % ist und vorzugsweise kleiner als 15 % ist.

13. Produkt nach einem der vorhergehenden Ansprüche, in welchem die Anzahl der SiC-Körner, die einen Längenfaktor F größer als 5 aufweisen, größer als 1 % ist und vorzugsweise kleiner als 8 % ist.

14. Produkt nach einem der vorhergehenden Ansprüche, in welchem die Anzahl der SiC-Körner, die einen Längenfaktor F größer als 8 aufweisen, kleiner als 1 % ist.

15. Produkt nach einem der vorhergehenden Ansprüche, in welchem jedes Korn, das einen Längenfaktor F größer als 3 aufweist, mit mindestens einem und vorzugsweise mindestens zwei anderen Körnern in Kontakt steht, die einen Längenfaktor F größer als 3 aufweisen.

16. Produkt nach einem der vorhergehenden Ansprüche, in welchem mehr als 20 % und vorzugsweise mehr als 30 % der SiC-Körner, die einen Längenfaktor F größer als 3 aufweisen, darüber hinaus eine Breite von mehr als 4 Mikrometer aufweisen.

17. Produkt nach einem der vorhergehenden Ansprüche, in welchem mehr als 15 %, vorzugsweise mehr als 20 % der Anzahl dieser anderen SiC-Körner in diesem Produkt einen Längenfaktor F größer als 2 aufweisen.

18. Produkt nach einem der vorhergehenden Ansprüche, in welchem die anderen SiC-Körner in diesem Produkt einen mittleren Äquivalenzdurchmesser von mehr als 2 Mikrometern und vorzugsweise weniger als 9 Mikrometern aufweisen.

19. Produkt nach dem vorhergehenden Anspruch, in welchem die anderen SiC-Körner in diesem Produkt einen mittleren Äquivalenzdurchmesser von mehr als 4 Mikrometern und vorzugsweise mehr als 5 Mikrometern aufweisen.

20. Produkt nach einem der vorhergehenden Ansprüche, nicht oder kaum umfassend Zwischenzonen zwischen den Körnern, deren Sauerstoffgehalt mehr als 15 Gew.-% beträgt und deren größte Länge größer oder gleich 50 nm ist.

21. Produkt nach einem der vorhergehenden Ansprüche, in welchem der Gesamtgehalt des Elements Sauerstoff kleiner als 1 Gew.-% ist.

22. Panzerung- oder Abschirmungselement, umfassend als Abschirmungsmittel ein gesintertes Produkt nach einem der vorhergehenden Ansprüche.

## Claims

1. A product obtained by solid-phase sintering of a silicon carbide powder and of a sintering additive, said product having a relative density of greater than 98.5% and comprising:
- more than 92% by weight of SiC present in the form of grains,
- less than 2% by weight of elemental oxygen,
- less than 6% by weight, in total, of other elements, said product being **characterized in that**:
- more than 10% by number of the SiC grains, on the basis of the total number of said grains, have an elongation factor F of greater than 3 (F > 3),
- more than 50% by number of said grains, the elongation factor F of which is greater than 3, have a width of greater than 3 micrometers,
- the other SiC grains in said product have a mean equivalent diameter of greater than 1 micrometer and less than 20 micrometers and **in that** the number of SiC grains having an elongation factor F of greater than 6 is less than 7%, said product comprising between 0.1% and 4% by weight of at least one other element chosen from boron, titanium, zirconium and free carbon and less than 2% by weight, in total, of other elements.

2. The product as claimed in the preceding claim, wherein the sum, by weight, of the elements boron, free carbon, titanium and zirconium is between 0.2% and 3.2% by weight.

3. The product as claimed in one of the preceding claims, wherein the sum, by weight, of the elements boron, free carbon, titanium and zirconium is less than 2% by weight.

4. The product as claimed in one of the preceding claims, wherein the sintering additive is selected from carbon, carbides of boron, titanium and zirconium or borides of zirconium and titanium, alone or as a mixture.

5. The sintered product as claimed in one of the preceding claims, comprising between 0.1% and 0.5% by weight of boron and between 0.1% and 2.7% by weight of free carbon.

6. The product as claimed in the preceding claim, wherein the sintering additive comprises or consists of a mixture of boron carbide and carbon.

7. The sintered product as claimed in one of the preceding claims, having a relative density of greater than 99%.

8. The sintered product as claimed in one of the preceding claims, wherein the total sum of the lanthanide elements, actinide elements and yttrium in the product is less than 0.05% by weight.

9. The sintered product as claimed in one of the preceding claims, wherein the aluminum content is less than 1000 ppm and greater than 50 ppm, relative to the weight of said product.

10. The product as claimed in one of the preceding claims, wherein the number of SiC grains having an elongation factor F of greater than 3 is greater than 15% and less than 40%, and preferably is greater than 18% and less than 35%.

11. The product as claimed in one of the preceding claims, wherein more than 60% by number of SiC grains having an elongation factor F of greater than 3 have a width of greater than 3 micrometers.

12. The product as claimed in one of the preceding claims, wherein the number of SiC grains having an elongation factor F of greater than 4 is greater than 2% and preferably is less than 15%.

13. The product as claimed in one of the preceding claims, wherein the number of SiC grains having an elongation factor F of greater than 5 is greater than 1% and preferably is less than 8%.

14. The product as claimed in one of the preceding claims, wherein the number of SiC grains having an elongation factor F of greater than 8 is less than 1%.

15. The product as claimed in one of the preceding claims, wherein each grain having an elongation factor F of greater than 3 is in contact with at least one, and preferably with at least two other grains having an elongation factor F of greater than 3.

16. The product as claimed in one of the preceding claims, wherein more than 20% and preferably more than 30% of the grains having an elongation factor F of greater than 3 additionally have a width of greater than 4 micrometers.

17. The product as claimed in one of the preceding claims, wherein more than 15% by number, preferably more than 20% by number, of said other SiC grains in said product have an elongation factor F of greater than 2.

18. The product as claimed in one of the preceding claims, wherein the other SiC grains in said product have a mean equivalent diameter of greater than 2 micrometers and preferably less than 9 micrometers.

19. The product as claimed in the preceding claim, wherein the other SiC grains in said product have a mean equivalent diameter of greater than 4 micrometers, preferably a mean equivalent diameter of greater than 5 micrometers.

20. The product as claimed in one of the preceding claims, comprising no or substantially no intermediate zones between the grains, the oxygen content of which is greater than 15% by weight and the greatest length of which is greater than or equal to 50 nm.

21. The product as claimed in one of the preceding claims, wherein the total content of oxygen element is less than 1% by weight.

22. An armor or armor-plating component comprising, as armor-plating means, a sintered product as claimed in one of the preceding claims.
